# EUROPÄISCHE PATENTSCHRIFT

(11) **EP 4 061 646 B1**
(45) Veröffentlichungstag und Bekanntmachung des Hinweises auf die Patenterteilung: **13.09.2023**
(21) Anmeldenummer: 20792367.3
(22) Anmeldetag: 13.10.2020
(51) Int. Cl.: B60C 11/03, B60C 11/04, B60C 11/13, B60C 11/12

(54) **NUTZFAHRZEUGREIFEN**
HEAVY TRUCK TYRE
PNEUMATIQUE POUR POIDS LOURD

(30) Priorität: 21.11.2019 DE 102019217940
(43) Veröffentlichungstag der Anmeldung: 28.09.2022
(73) Patentinhaber: Continental Reifen Deutschland GmbH, 30165 Hannover (DE)
(72) Erfinder: SCHWENKE, Andreas, 30165 Hannover (DE); KRISTEN, Florian, 30165 Hannover (DE); YEO, Chun Yi, 30165 Hannover (DE); ROTHER, Helge, 30165 Hannover (DE)
(74) Vertreter: Continental Corporation
(86) Internationale Anmeldenummer: PCT/EP2020/078739
(87) Internationale Veröffentlichungsnummer: WO 2021/099031

(56) Entgegenhaltungen:
- EP-A1- 3 560 733
- WO-A1-2017/040007
- DE-A1-102017 202 939
- JP-A- 2012 020 702
- US-A1- 2007 062 626

## Beschreibung

Die Erfindung betrifft einen Nutzfahrzeugreifen in Radialbauart mit einem Laufstreifen mit auf Profiltiefe ausgeführten Umfangsrillen, welche den Laufstreifen in zumindest zwei im mittleren Bereich des Laufstreifens verlaufende Profilrippen mit durch Querrillen voneinander getrennten Profilblöcken gliedern, wobei zumindest eine der an eine Profilrippe angrenzenden Umfangsrillen im Querschnitt einen radial äußeren einschnittartig schmalen Abschnitt und einen im Inneren des Laufstreifens an diesen anschließenden, breiter als der einschnittartig schmale Abschnitt ausgeführten Kanal aufweist, welcher von zwei Kanalwänden und einem den Rillengrund bildenden Kanalgrund begrenzt ist, und wobei diese Umfangsrille in ihrem Verlauf durch Einmündungsstellen von Querrillen unterbrochen ist.

Ein derartiger Nutzfahrzeugreifen ist beispielsweise aus der WO 2017/040007 A1 bekannt. Gemäß einem Ausführungsbeispiel weist der Laufstreifen dieses Reifens drei mittlere Profilrippen und zwei schulterseitige Profilrippen auf, wobei die Profilrippen durch auf Profiltiefe ausgeführte Umfangsrillen voneinander getrennt sind. Die die mittleren Profilrippen voneinander trennenden Umfangsrillen weisen, im Querschnitt betrachtet, jeweils einen radial äußeren, einschnittartig schmalen Abschnitt und einen im Inneren des Laufstreifens an diesen anschließenden, breiter als der einschnittartig schmale Abschnitt ausgeführten Kanal auf. Ferner sind die mittleren Profilrippen mit einschnittartigen Querrillen versehen, welche die mittleren Profilrippen durchqueren und in die jeweilige Umfangsrille einmünden.

Ein weiterer Nutzfahrzeugreifen der eingangs genannten Art ist beispielsweise der Goodyear Reifen mit der Bezeichnung FuelMaxS (siehe *https:*//*www.goodyear.eu*/*de_de*/*truck*/*tires*/*fuelmax-s,* abgerufen am 16.10.2019). Dieser Reifen weist im Laufstreifen eine zentrale Umfangsrille auf, die gemäß der *"IntelliMax Profilrillen Technologie"* ausgestaltet ist und sich aus einem radial äußeren einschnittartig schmalen Abschnitt und einen im Inneren des Laufstreifens an diesen anschließenden Kanal zusammensetzt. Aus der WO 2017/177132 A1 ist ein Nutzfahrzeugreifen bekannt, dessen Laufstreifen schulterseitig jeweils eine weitgehend unstrukturierte Profilrippe und zwischen diesen Profilrippen vier weitere Profilrippen aufweist, welche von schmalen, in Draufsicht wellenförmig verlaufenden Einschnitten durchquert sind. Sämtliche Profilrippen sind voneinander durch Umfangsrillen getrennt, wobei zu den schulterseitigen Profilrippen breite Umfangsrillen ausgebildet sind. Entlang des Reifenäquators verläuft eine Umfangsrille, welche einen einschnittartig schmalen Abschnitt und einen im Inneren des Laufstreifens befindlichen, den Rillengrund aufweisenden Kanal aufweist. Dieser Kanal besitzt eine Höhe von 25 % bis 75 % der vorgesehenen Profiltiefe und weist an seiner breitesten Stelle eine Breite von 3,0 mm bis 9,0 mm auf. Am Kanalgrund befinden sich in Umfangsrichtung aneinandergereiht kleine Erhebungen, welche ein Auswerfen von Steinen aus dem Kanal begünstigen sollen. Ein Nutzfahrzeugreifen mit einem derartigen Laufstreifen soll gute Nassbrems-Eigenschaften und gleichzeitig eine hohe Abriebbeständigkeit aufweisen.

Ferner ist aus DE 10 2017 202 939 A1 ein Nutzfahrzeugreifen mit einem Laufstreifen mit von Rillen, beispielsweise Umfangs- und Querrillen, begrenzten Profilblöcken bekannt, wobei die Rillen in Draufsicht T-Kreuzungen bilden und in den Kreuzungsbereichen der T-Kreuzungen Vorsprünge ausgebildet sind. Die Vorsprünge weisen in radialer Richtung eine Höhe von 10% bis 80% der Profiltiefe auf und sind an jener Blockflanke angebunden, welche der Einmündung der den T-Längsbalken bildenden Rille gegenüberliegt. Solche Vorsprünge bilden stabil und effektiv ausgeführte Steinauswerfer.

Die EP 3 560 733 A1 offenbart einen Fahrzeugluftreifen mit einem Laufstreifen mit einer Profilrippen voneinander trennenden Umfangsrille, welche, im Querschnitt betrachtet, einen radial äußeren schmalen Abschnitt und einen im Inneren des Laufstreifens an diesen anschließenden, breiter als den schmalen Abschnitt ausgeführten, ausschließlich in die eine Profilrippe hineinragenden, asymmetrischen Kanal aufweist. Die Umfangsrille ist gegenüberliegend zum Kanal von einer zum Rillengrund verlaufenden Rillenflanke begrenzt, an welcher in Umfangsrichtung voneinander beabstandete, in radialer Richtung langgestreckte, quaderartige Vorsprünge ausgebildet sind. Der Reifen soll ein gutes Wasserdrainagevermögen und ein gleichmäßiges Abriebverhalten aufweisen.

Aus der JP 2012 020 702 A ist ein Fahrzeugluftreifen mit einem Laufstreifen mit von Umfangs- und Querrillen begrenzten Profilblöcken bekannt, wobei die Umfangs- und Querrillen in Draufsicht T-Kreuzungen bilden. In den Kreuzungsbereichen der T-Kreuzungen sind nasenförmige Vorsprünge ausgebildet, welche an jener Blockflanke angebunden sind, welche der Einmündung der jeweiligen Querrille gegenüberliegt und welche jeweils einen von der Blockflanke in Richtung zur Querrille abfallenden Nasenrücken aufweisen. Die Vorsprünge sollen als Steinauswerfer wirken.

Aus der US 2007/0062626 A1 ist ein weiterer Fahrzeugluftreifen mit einem Laufstreifen mit von Umfangs- und Querrillen voneinander getrennten Profilblöcken bekannt. In den Rillen sind Vorsprünge ausgebildet, welche sich jeweils aus einem in Erstreckungsrichtung der Rille langgestreckten, mittig in der Rille ausgebildeten, ersten Vorsprungteil und einem den ersten Vorsprungteil mittig an eine der Rillenflanken anbindenden, zweiten Vorsprungteil zusammensetzen. Der erste Vorsprungteil weist in seiner Längsrichtung zum Rillengrund abfallende Schrägflächen und eine zwischen den Schrägflächen sowie parallel zur Laufstreifenperipherie verlaufende quaderförmige Außenfläche auf. Der zweite Vorsprungteil ist in radialer Richtung von einer Schrägfläche begrenzt, welche von der jeweiligen Rillenflanke zur quaderförmigen Außenfläche des ersten Vorsprungteils abfällt. Die Vorsprünge sollen als Steinauswerfer wirken.

Umfangsrillen mit einschnittartig schmalen Abschnitten und im Inneren des Laufstreifens befindlichen, den Rillengrund aufweisenden, wesentlich breiter als der schmale Abschnitt ausgeführten Kanälen sind vor allem im zentralen bzw. mittleren Laufstreifenbereich von Vorteil. Der einschnittartig schmale Abschnitt sorgt zu Beginn des Laustreifenabriebes für eine hohe Profilsteifigkeit und daher für einen geringen und gleichmäßigen Abrieb des Laufstreifens, der Kanal sorgt bei weit abgeriebenem Laufstreifen für gute Bremseigenschaften auf Nässe. Sind nun im Laufstreifen Profilrippen vorgesehen, die von Querrillen durchquert sind, ergeben sich Kreuzungsstellen der Querrillen mit den erwähnten Umfangsrillen. Gerade an diesen Kreuzungsstellen ist die Gefahr, dass sich Steine in den Kanalbereichen verfangen, besonders hoch. Verfangene Steine können zu Beschädigungen, insbesondere Einrissen, im Gummimaterial des Laufstreifens führen.

Der Erfindung liegt somit die Aufgabe zugrunde, bei einem Nutzfahrzeugreifen eingangs genannten Art im Bereich der Einmündungsstellen von Querrillen in die mit einem Kanal versehenen Umfangsrillen die Gefahr des Verfangens von Steinen deutlich zu reduzieren.

Gelöst wird die gestellte Aufgabe erfindungsgemäß dadurch, dass an der gegenüber den Einmündungsstellen der Querrillen befindlichen Kanalwand, den Einmündungsstellen gegenüber, jeweils lokal ein Vorsprung ausgebildet ist.

Auf diese Weise wird der an den Einmündungsstellen von Querrillen in die Umfangsrille der für ein Steineverfangen besonders anfällige Kanalbereich durch lokal ausgebildete Vorsprünge volumenmäßig verringert. Die Vorsprünge wirken zudem als Elemente, die ein Steineauswerfen begünstigen. Nachdem die Vorsprünge lediglich lokal ausgebildet sind, haben sie auch keine negativen Auswirkungen auf das Wasserdrainagevermögen der Querrillen und des Kanals.

Bei einer möglichen Ausgestaltung der Profilierung des Laufstreifens des Nutzfahrzeugreifens ist in Profilblöcken jener Profilrippe, die an die mit dem Kanal versehene Umfangsrille angrenzt, zumindest ein Einschnitt ausgebildet, welcher ebenfalls in die Umfangsrille einmündet. Bevorzugt ist auch an der gegenüber den Einmündungsstellen dieser Einschnitte befindlichen Kanalwand, den Einmündungsstellen gegenüber, jeweils lokal ein Vorsprung ausgebildet. Vorsprünge im Bereich der Einmündungsstellen von Einschnitten sind ebenfalls von Vorteil, um ein Steineverfangen in der Umfangsrille zu vermeiden.

Für die Stabilität der Vorsprünge ist es vorteilhaft, wenn sie auch an den Kanalgrund angebunden sind.

Von besonderem Vorteil ist ferner Ausführung, bei welcher die Vorsprünge an die Breite der Querrillen bzw. Einschnitte angepasst sind, indem die Vorsprünge in der Umfangsrichtung des Kanals langgestreckt sind und in der Umfangsrichtung eine Erstreckungslänge aufweisen, derart, dass die Einmündungsstellen der Querrillen bzw. der Einschnitte in einem Abriebzustand, in welchem der Laufstreifen bis zum Kanal abgerieben ist, beidseitig um 1,5 mm bis 3,0 mm überragt sind.

Für eine besonders effektive Wirkung der Vorsprünge sind weitere Merkmale ihrer Ausgestaltung besonders vorteilhaft und bevorzugt.

Bei einer dieser Ausgestaltungen weisen die Vorsprünge mittig gegenüber den Einmündungsstellen der Querrillen bzw. Einschnitte eine Querschnittsfläche auf, die mindestens 10 % und bis zu 50 % der Kanalquerschnittsfläche beträgt. Bei einer weiteren bevorzugten Ausgestaltung reichen die Vorsprünge höchstens bis zur Kanalmitte.

Eine weitere bevorzugte und vorteilhafte Ausgestaltung besteht darin, dass die Vorsprünge in radialer Richtung eine Höhe aufweisen, die 30 % bis 100 %, vorzugsweise bis zu 50 %, der radialen Erstreckungslänge des Kanals in radialer Richtung beträgt.

Für ein gutes Wasserdrainagevermögen des Kanals ist es von Vorteil, wenn die beiden Kanalwände des Kanals vom Kanalgrund ausgehende Wandabschnitte aufweisen, welche jeweils unter einem Winkel von 5° bis 15°, insbesondere von 10°, zur radialen Richtung verlaufen und sich über 70 % bis 80 % der radialen Erstreckungslänge des Kanals erstrecken. Darüber hinaus ist es bevorzugt, wenn der Kanal in radialer Richtung eine Erstreckungslänge von 30 % bis 60 % der Profiltiefe und eine größte Breite von 4,0 mm bis 9,0 mm aufweist.

Bei einer weiteren bevorzugten Ausführung weist der einschnittartig schmale Abschnitt der Umfangsrille eine insbesondere konstante Breite von 0,8 mm bis 1,5 mm und in radialer Richtung eine Erstreckungslänge auf, welche 30 % bis 60 % der Profiltiefe beträgt.

Bevorzugt weist ferner die Umfangsrille einen radial äußeren, sich V-förmig zur Laufstreifenperipherie erweiternden Abschnitt auf, welcher von Rillenwandabschnitten begrenzt ist, die unter einem Winkel von 30° bis 50° zur radialen Richtung verlaufen, wobei dieser Abschnitt an der Laufstreifenperipherie eine Breite von 2,5 mm bis 6,0 mm aufweist. Dieser Abschnitt sorgt für gute Nassbremseigenschaften bei neuem Reifen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Draufsicht auf Umfangsabschnitte von zwei Profilrippen eines Laufstreifens eines Nutzfahrzeugreifens mit einer ersten Ausführungsform der Erfindung,
Fig. 1a eine Schnittansicht entlang der Linie Ia-Ia der Fig. 1,
Fig. 1b eine Ansicht der im Schnitt gemäß Fig. 1a vorliegenden Konturen der Umfangsrille in vergrößerter Darstellung,
Fig. 1c eine Variante in einer zu Fig. 1b analogen Darstellung,
Fig. 2 eine Variante der in Fig. 1 gezeigten Ausführungsform der Erfindung, ebenfalls anhand eines Umfangsabschnittes von zwei Profilrippen eines Laufstreifens eines Nutzfahrzeugreifens,
Fig. 2a eine Schnittansicht entlang der Linie IIa-IIa der Fig. 2,
Fig. 3 eine Variante der in Fig. 2 gezeigten Ausführung, ebenfalls anhand eines Umfangabschnittes von zwei Profilrippen eines Laufstreifens eines Nutzfahrzeugreifens und
Fig. 3a eine Schnittansicht entlang der Linie IIIa-IIIa der Fig. 3.

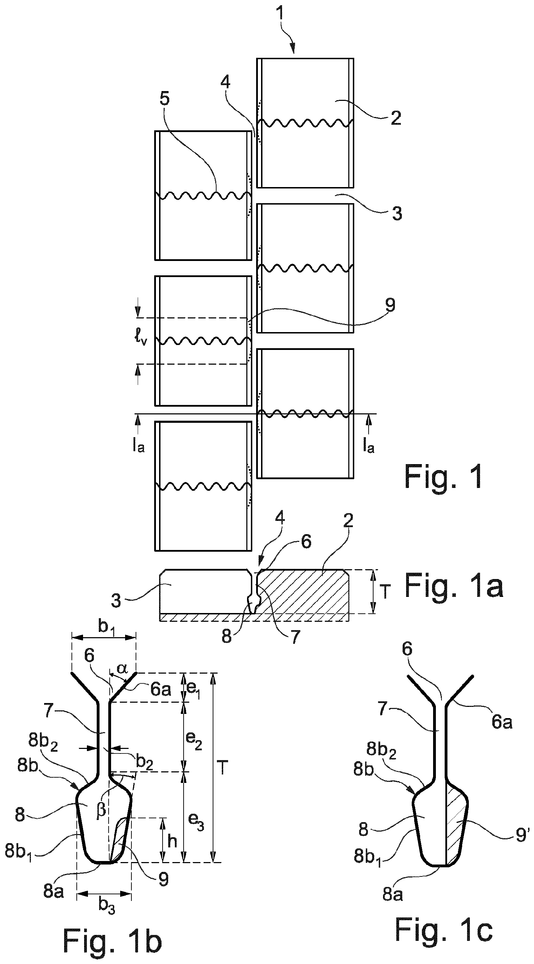

Fig. 1, Fig. 2 und Fig. 3 zeigen jeweils einen Umfangsabschnitt von zwei nebeneinander verlaufenden, voneinander durch eine Umfangsrille 4 getrennten Profilrippen 1 eines Laufstreifens eines Nutzfahrzeugreifens. Die im Laufstreifen vorgesehenen Umfangsrillen können gerade, zick-zack- oder wellenförmig in Umfangsrichtung verlaufen. Der Nutzfahrzeugreifen kann ein auf übliche Weise ausgeführter Reifen in Radialbauart sein, insbesondere ein Reifen für Lastkraftwagen.

Jede Profilrippe 1 besteht aus in Umfangsrichtung des Laufstreifens aufeinanderfolgenden Profilblöcken 2, die voneinander jeweils durch eine Querrille 3 getrennt sind, wobei in den Fig. 1 bis 3 von jeder Profilrippe 1 jeweils drei Profilblöcke 2 dargestellt sind. An jede Profilrippe 1 schließt seitlich vorzugsweise jeweils eine weitere, nicht gezeigte Umfangsrille an, welche die jeweilige Profilrippe 1 von einer weiteren Profilrippe trennt. Bei den schematisch dargestellten Ausführungsbeispielen sind rechteckige Profilblöcke 2 und in axialer Richtung verlaufende Querrillen 3 gezeigt. Bei einer tatsächlichen Ausführung der Profilrippen 1 weisen die Profilblöcke 2 üblicherweise eine von der rechteckigen Form abweichende Form auf und die Querrillen 3 erstrecken sich üblicherweise zumindest abschnittweise unter einem spitzen Winkel, welcher insbesondere bis zu 50°, vorzugsweise 10° bis 30°, beträgt, zur axialen Richtung. Die Umfangsrille 4 und die Querrillen 3 weisen bevorzugt eine Tiefe auf, welche der für den für den jeweiligen Laufstreifen vorgesehenen Profiltiefe T (siehe beispielsweise Fig. 1a) entspricht, die bei Nutzfahrzeugreifen in der Größenordnung von 8,0 mm bis 24,0 mm beträgt. In jedem Profilblock 2 ist mittig jeweils ein sich in axialer Richtung erstreckender, in Draufsicht in Wellen- bzw. Zick-Zack-Form verlaufender Einschnitt 5 vorgesehen. Die Einschnitte 5 weisen eine Breite in der Größenordnung von 0,4 mm bis 1,2 mm auf, ihre Tiefe entspricht höchstens der vorgesehenen Profiltiefe T, wobei die Einschnitte 5 Abschnitte unterschiedlicher Tiefen aufweisen können.

Die Umfangsrille 4 weist in jenen Umfangsabschnitten, in welchen keine Einmündungsbereiche von Querrillen 3 vorliegen, einen speziellen Querschnitt auf, welcher nun anhand der Fig. 1a, 2a und 3a sowie der Fig. 1b näher erläutert wird. Die Umfangsrille 4 setzt sich in radialer Richtung, beginnend bei der Laufstreifenperipherie, aus drei unterschiedlich gestalteten Bereichen bzw. Abschnitten zusammen, einem radial äußeren, sich V-förmig zur Laufstreifenperipherie erweiternden Abschnitt 6, einem an diesen anschließenden und in radialer Richtung verlaufenden schmalen mittleren Abschnitt 7 und einem den Rillengrund mitumfassenden Kanal 8. Der radial äußere, V-förmig erweiterte Abschnitt 6 wird von Rillenwandabschnitten 6a begrenzt, die unter einem Winkel α von 30° bis 50° zur radialen Richtung verlaufen, wobei die Breite b₁ des Abschnittes 6 an der Laufstreifenperipherie 2,5 mm bis 6,0 mm beträgt. Die Rillenwandabschnitte 6a erstrecken sich entlang der gesamten Länge der Profilblöcke 2 in Umfangsrichtung. Der äußere V-förmig erweiterte Abschnitt 6 weist in radialer Richtung eine Erstreckungslänge e₁ auf, die 10 % bis 30 % der Profiltiefe T beträgt. Der an den Abschnitt 6 anschließende mittlere Abschnitt 7 weist eine konstante Breite b₂ von 0,8 mm bis 1,2 mm auf und in radialer Richtung eine Erstreckungslänge e₂ auf, welche 30 % bis 60 % der Profiltiefe T beträgt.

Der in radialer Richtung längliche und sich radial nach außen verbreiternde Kanal 8 weist in dieser Richtung eine Erstreckung es von 30 % bis 60 % der Profiltiefe T auf. Der Kanal 8 ist von einem Kanalgrund 8a und seitlichen, in den Laufstreifen hineingewölbten Kanalwänden 8b begrenzt, die sich aus zwei Wandabschnitten 8b₁ und 8b₂ zusammensetzen, jeweils einem seitlichen Wandabschnitt 8bi und einem zum mittleren Abschnitt 7 verlaufenden oberen Wandabschnitt 8b₂, wobei die Übergänge jeweils gerundet sind. Die seitlichen Wandabschnitte 8b₁ verlaufen gegensinnig zueinander geneigt jeweils unter einem Winkel β von 5° bis 15°, insbesondere von 10°, zur radialen Richtung und erstrecken sich über 70 % bis 80 % der Erstreckungslänge es. Der Kanal 8 weist seine größte Breite b₃ am Übergangsbereich von den Wandabschnitten 8b₁ in die Wandabschnitte 8b₂ auf. Bei einer möglichen und bevorzugten Ausführung der Umfangsrille 4 beträgt e₁ 2,0 mm bis 4,0 mm, e₂ und e₃ betragen jeweils 6,0 mm bis 9,0 mm und die Breite b₃ beträgt 5,0 mm bis 7,0 mm.

Wie Fig. 1 bis 3 sowie die Schnittdarstellungen in Fig. 1a, 1b, 2a und 3a zeigen, befinden sich im Kanal 8, an den Kanalgrund 8a und eine der Kanalwände 8b angebunden, in Umfangsrichtung des Kanals 8 langgestreckte Vorsprünge 9. Im mittigen Schnitt reicht jeder Vorsprung 9 höchsten bis zur Kanalmitte und weist in radialer Richtung und entlang der Kanalwand 8b eine Höhe h auf, die bei der in Fig. 1b dargestellten bevorzugten Ausführung bis zu 50 % der Erstreckungslänge es des Kanals 8 in radialer Richtung beträgt.

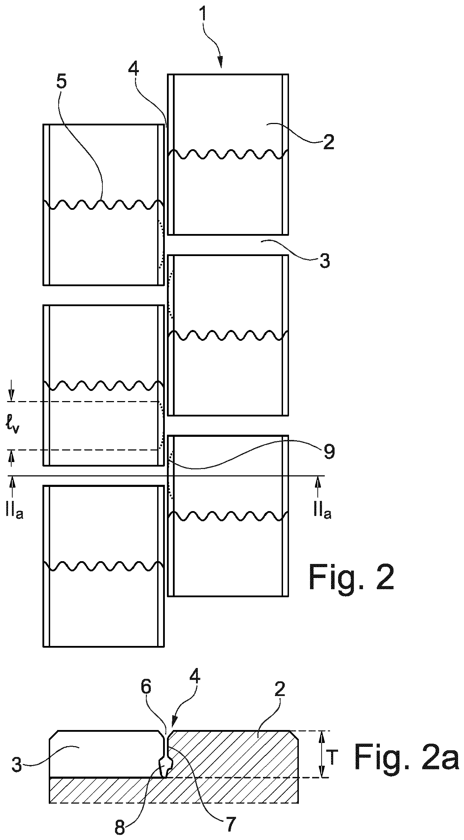

Am Kanalgrund 8a erstreckt sich der Vorsprung 9 insbesondere höchstens bis zur Mitte des Kanalgrundes 8a. Die Vorsprünge 9 befinden sich in den beiden in Fig. 1 und 2 gezeigten Ausführungsbeispielen jeweils an jener seitlichen Kanalwand 8b, die sich gegenüber der Einmündungsstelle einer Querrille 3 befindet. In Umfangsrichtung erstreckt sich jeder Vorsprung 9 über eine Erstreckungslänge lᵥ, die die Breite der Einmündungsstelle der Querrille 3 in einem Abriebzustand, in welchem der Laufstreifen bis zum Kanal 8 (der Abschnitt 7 ist durch Abrieb bereits komplett verschwunden) abgerieben ist, beidseitig um 1,5 mm bis 3,0 mm überragt. In Draufsicht betrachtet ist die äußere Fläche der Vorsprünge 9 insgesamt nach außen bogenförmig gerundet.

Fig. 1c zeigt in einer Darstellung analog zu Fig. 1a eine weitere Ausführungsvariante eines Vorsprunges 9`, welcher an die Kanalwand 8b und den Kanalgrund 8a angebunden bis zum oberen Wandabschnitt 8b₂ reicht und eine im Wesentlichen in radialer Richtung verlaufende äußere Fläche besitzt.

In seiner Mitte, daher auch mittig gegenüber dem Einmündungsbereich der Querrille 3 weist jeder Vorsprung 9, 9` eine Querschnittsfläche auf, die mindestens 10 % und bis zu 50 % der Kanalquerschnittsfläche beträgt.

Bei der in Fig. 1 gezeigten Ausführung sind die beiden Profilrippen 1 in Umfangsrichtung in der Größenordnung von 50 % der Umfangslänge der Profilblöcke 2 gegeneinander versetzt, sodass die Querrillen 3 in der einen Profilrippe 1 mit den Einschnitten 5 in der zweiten Profilrippe 1 fluchten. Die Vorsprünge 9 befinden sich gegenüber den Einmündungsstellen der Querrillen 3.

Die in Fig. 2 gezeigte Ausführung unterscheidet sich von jener gemäß Fig. 1 dadurch, dass die beiden Profilrippen 1 jeweils in der Größenordnung von 25 % der Umfangserstreckungslänge der Profilblöcke 2 gegeneinander versetzt sind.

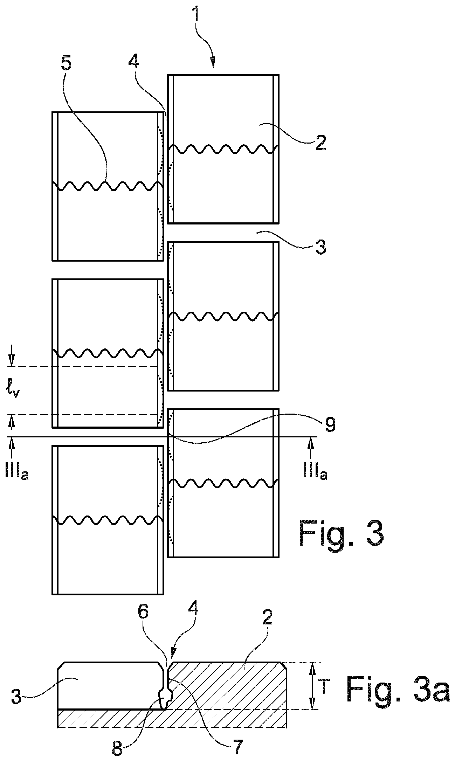

Das in Fig. 3 gezeigte Ausführungsbeispiel entspricht weitgehend jenem gemäß Fig. 2, wobei sich Vorsprünge 9 sowohl gegenüber den Einmündungsstellen der Querrillen 3 als auch gegenüber den Einmündungsstellen der Einschnitte 5 im Kanal 8 befinden.

Wie insbesondere anhand der Schnittdarstellungen nachvollziehbar ist, verschwindet mit zunehmendem Laufstreifenabrieb zuerst der radial äußere, V-förmig erweiterte Abschnitt 6, anschließend der schmale mittlere Abschnitt 7 bis schließlich bei weiter fortschreitendem Abrieb der Kanal 8 zum Vorschein kommt. Bei neuem Reifen und geringem Abrieb sorgt der V-förmig erweiterte Abschnitt der Umfangsrille für gute Bremseigenschaften auf Nässe, der schmale, mittlere Abschnitt 7 gestattet ein gegenseitiges Abstützen seiner Rillenwandabschnitte, gewährleistet eine hohe Profilsteifigkeit und sorgt daher für gute Handlingeigenschaften und einen geringen sowie gleichmäßigen Abrieb. Das größere Volumen beim Erreichen des Kanals 8 im Laufe des Laufstreifenabriebs sorgt durch die große Wasseraufnahmefähigkeit für gute Bremseigenschaften auf Nässe. Der Laustreifen hat durch den Abrieb an Steifigkeit zugenommen, sodass das größere Volumen im Kanal 8 diesbezüglich nicht von Nachteil ist. Die in der Umfangsrille 4 ausgebildeten Vorsprünge 9, 9` reduzieren lokal den ausgewölbten Bereich im Kanal 8 gegenüber den Einmündungen der Querrillen, sodass an diesen ansonsten für ein Verfangen von Steinen heiklen Stellen das Risiko des Verfangens von Steinen merklich reduziert ist.

### Bezugszeichenliste

- 1: Profilrippe
- 2: Profilblock
- 3: Querrille
- 4: Umfangsrille
- 5: Einschnitt
- 6: Abschnitt
- 6a: Rillenwandabschnitt
- 7: Abschnitt
- 8: Kanal
- 8a: Kanalgrund
- 8b: Kanalwand
- 8b₁, 8b₂: Kanalwandabschnitt
- 9, 9': Vorsprung
- bi, b₂, b₃: Breite
- α, β: Winkel
- ei, e₂, e₃: Erstreckungslänge
- lᵥ: Erstreckungslänge
- h: Höhe
- T: Profiltiefe

## Patentansprüche

1. Nutzfahrzeugreifen in Radialbauart mit einem Laufstreifen mit auf Profiltiefe ausgeführten Umfangsrillen (4), welche den Laufstreifen in zumindest zwei im mittleren Bereich des Laufstreifens verlaufende Profilrippen (1) mit durch Querrillen (3) voneinander getrennten Profilblöcken (2) und in schulterseitige Profilrippen gliedern, wobei zumindest eine der an eine mittlere Profilrippe (1) angrenzenden Umfangsrillen (4) im Querschnitt einen radial äußeren einschnittartig schmalen Abschnitt (7) und einen im Inneren des Laufstreifens an diesen anschließenden, breiter als der einschnittartig schmale Abschnitt (7) ausgeführten Kanal (8) aufweist, welcher von zwei Kanalwänden (8b) und einem den Rillengrund bildenden Kanalgrund (8a) begrenzt ist, und wobei diese Umfangsrille (4) in ihrem Verlauf durch Einmündungsstellen von Querrillen (3) unterbrochen ist,
**dadurch gekennzeichnet,**
**dass** an der gegenüber den Einmündungsstellen der Querrillen (3) befindlichen Kanalwand (8b), den Einmündungsstellen gegenüber, jeweils lokal ein Vorsprung (9, 9') ausgebildet ist.

2. Nutzfahrzeugreifen mit zumindest einem Einschnitt (5) in Profilblöcken (2) jener Profilrippe (1), die an die mit dem Kanal (8) versehene Umfangsrille (4) angrenzt, wobei die Einschnitte (5) in die Umfangsrille (4) einmünden, nach Anspruch 1, **dadurch gekennzeichnet, dass** auch an der gegenüber den Einmündungsstellen von Einschnitten (5) befindlichen Kanalwand (8b), den Einmündungsstellen gegenüber, jeweils lokal ein Vorsprung (9, 9`) ausgebildet ist.

3. Nutzfahrzeugreifen nach Anspruch 1 oder 2, **dadurch gekennzeichnet, dass** die Vorsprünge (9, 9`) auch an den Kanalgrund (8a) angebunden sind.

4. Nutzfahrzeugreifen nach einem der Ansprüche 1 bis 3, **dadurch gekennzeichnet, dass** die Vorsprünge (9, 9') in der Umfangsrichtung des Kanals (8) langgestreckt sind und in der Umfangsrichtung eine Erstreckungslänge (lᵥ) aufweisen, derart, dass die Einmündungsstellen der Querrillen (3) bzw. der Einschnitte (5) in einem Abriebzustand, in welchem der Laufstreifen bis zum Kanal (8) abgerieben ist, beidseitig um 1,5 mm bis 3,0 mm überragt sind.

5. Nutzfahrzeugreifen nach einem der Ansprüche 1 bis 4, **dadurch gekennzeichnet, dass** die Vorsprünge (9, 9') mittig gegenüber den Einmündungsstellen der Querrillen (3) bzw. Einschnitte (5) eine Querschnittsfläche aufweisen, die mindestens 10 % und bis zu 50 % der Kanalquerschnittsfläche beträgt.

6. Nutzfahrzeugreifen nach einem der Ansprüche 1 bis 5, **dadurch gekennzeichnet, dass** die Vorsprünge (9, 9') höchsten bis zur Kanalmitte reichen.

7. Nutzfahrzeugreifen nach einem der Ansprüche 1 bis 6, **dadurch gekennzeichnet, dass** die Vorsprünge (9, 9') in radialer Richtung eine Höhe (h) aufweisen, die 30 % bis 100 %, vorzugsweise bis zu 50 %, der radialen Erstreckungslänge (e₃) des Kanals (8) in radialer Richtung beträgt.

8. Nutzfahrzeugreifen nach einem der Ansprüche 1 bis 7, **dadurch gekennzeichnet, dass** die beiden Kanalwände (8b) des Kanals (8) vom Kanalgrund (8a) ausgehende Wandabschnitte (8b₁) aufweisen, welche jeweils unter einem Winkel (β) von 5° bis 15°, insbesondere von 10°, zur radialen Richtung verlaufen und sich über 70 % bis 80 % der radialen Erstreckungslänge (e₃) des Kanals (8) erstrecken.

9. Nutzfahrzeugreifen nach einem der Ansprüche 1 bis 8, **dadurch gekennzeichnet, dass** der Kanal (8) in radialer Richtung eine Erstreckungslänge (e₃) von 30 % bis 60 % der Profiltiefe (T) und eine größte Breite (b₃) von 4,0 mm bis 9,0 mm aufweist.

10. Nutzfahrzeugreifen nach einem der Ansprüche 1 bis 9, **dadurch gekennzeichnet, dass** der einschnittartig schmale Abschnitt (7) der Umfangsrille (4) eine insbesondere konstante Breite (b₂) von 0,8 mm bis 1,5 mm und in radialer Richtung eine Erstreckungslänge (e₂) aufweist, welche 30 % bis 60 % der Profiltiefe (T) beträgt.

11. Nutzfahrzeugreifen nach einem der Ansprüche 1 bis 10, **dadurch gekennzeichnet, dass** die Umfangsrille (4) einen radial äußeren, sich V-förmig zur Laufstreifenperipherie erweiternden Abschnitt (6) aufweist, welcher von Rillenwandabschnitten (6a) begrenzt ist, die unter einem Winkel (α) von 30° bis 50° zur radialen Richtung verlaufen, wobei dieser Abschnitt (6) an der Laufstreifenperipherie eine Breite (b₁) von 2,5 mm bis 6,0 mm aufweist.

## Claims

1. Commercial vehicle tire of radial design with a tread with circumferential grooves (4) formed to a profile depth, which divide the tread into at least two profile ribs (1) running in the central region of the tread with profile blocks (2) separated from one another by transverse grooves (3) and into shoulder-side profile ribs, wherein at least one of the circumferential grooves (4) adjoining a central profile rib (1) has, in cross section, a radially outer sipe-like narrow section (7) and a channel (8) adjoining this in the interior of the tread which is configured to be wider than the sipe-like narrow section (7) and which is delimited by two channel walls (8b) and a channel bottom (8a) forming the groove bottom, and wherein this circumferential groove (4) is interrupted in its course by entry points of transverse grooves (3),
**characterized**
**in that**, opposite the entry points, a projection (9, 9') is formed locally in each case on the channel wall (8b) located opposite the entry points of the transverse grooves (3).

2. Commercial vehicle tire with at least one sipe (5) in profile blocks (2) of that profile rib (1) which adjoins the circumferential groove (4) provided with the channel (8), the sipes (5) opening into the circumferential groove (4), according to Claim 1, **characterized in that**, opposite the entry points, a projection (9, 9') is also formed locally in each case on the channel wall (8b) located opposite the entry points of sipes (5).

3. Commercial vehicle tire according to Claim 1 or 2, **characterized in that** the projections (9, 9') are also connected to the channel bottom (8a).

4. Commercial vehicle tire according to one of Claims 1 to 3, **characterized in that** the projections (9, 9') are elongated in the circumferential direction of the channel (8) and have an extension length (lᵥ) in the circumferential direction such that the entry points of the transverse grooves (3) or of the sipes (5) are projected beyond on both sides by 1.5 mm to 3.0 mm in a worn state in which the tread is worn down to the channel (8).

5. Commercial vehicle tire according to one of Claims 1 to 4, **characterized in that** the projections (9, 9') have a cross-sectional area centrally opposite the entry points of the transverse grooves (3) or sipes (5) that is at least 10% and up to 50% of the channel cross-sectional area.

6. Commercial vehicle tire according to one of Claims 1 to 5, **characterized in that** the projections (9, 9') reach at most up to the channel center.

7. Commercial vehicle tire according to one of Claims 1 to 6, **characterized in that** the projections (9, 9') have a height (h) in the radial direction which is 30% to 100%, preferably up to 50%, of the radial extension length (e₃) of the channel (8) in the radial direction.

8. Commercial vehicle tire according to one of Claims 1 to 7, **characterized in that** the two channel walls (8b) of the channel (8) have wall sections (8b₁) starting from the channel bottom (8a) which each run at an angle (β) of 5° to 15°, in particular of 10°, to the radial direction and extend over 70% to 80% of the radial extension length (e₃) of the channel (8).

9. Commercial vehicle tire according to one of Claims 1 to 8, **characterized in that** the channel (8) has in the radial direction an extension length (e₃) from 30% to 60% of the profile depth (T) and a maximum width (b₃) from 4.0 mm to 9.0 mm.

10. Commercial vehicle tire according to one of Claims 1 to 9, **characterized in that** the sipe-like narrow section (7) of the circumferential groove (4) has an in particular constant width (b₂) from 0.8 mm to 1.5 mm and in the radial direction has an extension length (e₂) which is 30% to 60% of the profile depth (T).

11. Commercial vehicle tire according to one of Claims 1 to 10, **characterized in that** the circumferential groove (4) has a radially outer section (6) which widens in a V shape toward the tread periphery and is delimited by groove wall sections (6a) which run at an angle (α) of 30° to 50° to the radial direction, this section (6) having a width (b₁) from 2.5 mm to 6.0 mm at the tread periphery.

## Revendications

1. Pneumatique de véhicule utilitaire de conception radiale comprenant une bande de roulement pourvue de rainures circonférentielles (4) qui s'étendent jusqu'à la profondeur de profilage et qui divisent la bande de roulement en au moins deux nervures profilées (1), qui s'étendent dans la zone médiane de la bande de roulement et qui comprennent des sculptures profilées (2) séparées les unes des autres par des rainures transversales (3), et en des nervures profilées côté épaulement, l'une au moins des rainures circonférentielles (4), adjacentes à une nervure profilée médiane (1), comportant dans une vue en coupe transversale une portion radialement extérieure (7) qui est étroite à la manière d'une incision et un canal (8) qui fait suite à ladite portion à l'intérieur de la bande de roulement, qui est plus large que la portion (7) étroite à la manière d'une incision et qui est délimité par deux parois de canal (8b) et un fond de canal (8a) formant le fond de rainure, et cette rainure circonférentielle (4) étant interrompue dans son tracé par des points de jonction de rainures transversales (3),
**caractérisé en ce que**
une saillie (9, 9') est formée localement, à l'opposé des points de jonction, sur la paroi de canal (8b) située à l'opposé des points de jonction des rainures transversales (3).

2. Pneumatique de véhicule utilitaire selon la revendication 1 qui comprend au moins une incision (5) dans des sculptures profilées (2) de la nervure profilée (1) qui est adjacente à la rainure circonférentielle (4) pourvue du canal (8), les incisions (5) débouchant dans la rainure circonférentielle (4), **caractérisé en ce qu'**une saillie (9, 9') est formée localement, à l'opposé des points de jonction, également sur la paroi de canal (8b) située à l'opposé des points de jonction des rainures transversales (5).

3. Pneumatique de véhicule utilitaire selon la revendication 1 ou 2, **caractérisé en ce que** les saillies (9, 9') sont également reliées au fond de canal (8a).

4. Pneumatique de véhicule utilitaire selon l'une des revendications 1 à 3, **caractérisé en ce que** les saillies (9, 9') s'étendent longitudinalement dans la direction circonférentielle du canal (8) et ont une longueur (lᵥ) dans la direction circonférentielle de sorte que, à l'état usé dans lequel la bande de roulement est usée jusqu'au canal (8), les points de jonction des rainures transversales (3) ou des incisions (5) font saillie des deux côtés sur 1,5 mm à 3,0 mm.

5. Pneumatique de véhicule utilitaire selon l'une des revendications 1 à 4, **caractérisé en ce que**, au milieu à l'opposé des points de jonction des rainures transversales (3) ou des incisions (5), les saillies (9, 9') ont une surface en coupe transversale qui est égale à au moins 10 % et jusqu'à 50 % de la surface du canal en coupe transversale.

6. Pneumatique de véhicule utilitaire selon l'une des revendications 1 à 5, **caractérisé en ce que** les saillies (9, 9') arrivent au maximum jusqu'au milieu du canal.

7. Pneumatique de véhicule utilitaire selon l'une des revendications 1 à 6, **caractérisé en ce que** les saillies (9, 9') ont dans la direction radiale une hauteur (h) qui est égale à 30 % jusqu'à 100 %, de préférence jusqu'à 50 %, de la longueur d'extension radiale (e₃) du canal (8) dans la direction radiale.

8. Pneumatique de véhicule utilitaire selon l'une des revendications 1 à 7, **caractérisé en ce que** les deux parois de canal (8b) du canal (8) comportent des portions de paroi (8b₁) qui s'étendent depuis le fond de canal (8a) et qui forment chacune un angle (β) de 5° à 15°, en particulier de 10°, par rapport à la direction radiale et qui s'étendent sur 70 % à 80 % de la longueur radiale (e₃) du canal (8).

9. Pneumatique de véhicule utilitaire selon l'une des revendications 1 à 8, **caractérisé en ce que** le canal (8) a dans la direction radiale une longueur d'extension (e₃) de 30 % à 60 % de la profondeur de profilage (T) et une largeur maximale (b₃) de 4,0 mm à 9,0 mm.

10. Pneumatique de véhicule utilitaire selon l'une des revendications 1 à 9, **caractérisé en ce que** la portion (7), étroite à la manière d'une incision, de la rainure circonférentielle (4) a une largeur (b₂), notamment constante, de 0,8 mm à 1,5 mm et dans la direction radiale une longueur (e₂) qui est égale à 30 % à 60 % de la profondeur de profilage (T).

11. Pneumatique de véhicule utilitaire selon l'une des revendications 1 à 10, **caractérisé en ce que** la rainure circonférentielle (4) comporte une portion radialement extérieure (6) qui s'élargit en forme de V vers la périphérie de la bande de roulement et qui est délimitée par des portions de paroi de rainure (6a) qui forment un angle (α) de 30° à 50° par rapport à la direction radiale, cette portion (6) ayant une largeur (b₁) de 2,5 mm à 6,0 mm à la périphérie de la bande de roulement.
